(19) Europäisches Patentamt
European Patent Office
Office européen des brevets

(11) **EP 2 534 805 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **11704048.5**

(22) Anmeldetag: **09.02.2011**

(51) Int Cl.:
**H04L 27/26** *(2006.01)*   **H04B 1/10** *(2006.01)*

(86) Internationale Anmeldenummer:
**PCT/EP2011/051846**

(87) Internationale Veröffentlichungsnummer:
**WO 2011/098462 (18.08.2011 Gazette 2011/33)**

(54) **VERFAHREN ZUR REDUKTION VON INFORMATIONSVERLUSTEN IN EINEM OFDM-BASIERTEN MEHRTRÄGERSIGNAL**

METHOD FOR REDUCING INFORMATION LOSSES IN AN OFDM-BASED MULTI-CARRIER SIGNAL

PROCÉDÉ DE RÉDUCTION DES PERTES D'INFORMATIONS DANS UN SIGNAL À PLUSIEURS PORTEUSES À BASE D'OFDM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2010 DE 102010007874**

(43) Veröffentlichungstag der Anmeldung:
**19.12.2012 Patentblatt 2012/51**

(73) Patentinhaber: **Deutsches Zentrum für Luft- und Raumfahrt e.V.**
**51147 Köln (DE)**

(72) Erfinder:
• **EPPLE, Ulrich**
  **81249 München (DE)**
• **BRANDES, Sinja**
  **82110 Gemering (DE)**

(74) Vertreter: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) Entgegenhaltungen:
• **NDO G ET AL: "An Adaptive Procedure for Impulsive Noise Mitigation over Power Line Channels", GLOBAL TELECOMMUNICATIONS CONFERENCE, 2009. GLOBECOM 2009. IEEE, IEEE, PISCATAWAY, NJ, USA, 30. November 2009 (2009-11-30), Seiten 1-6, XP031645709, ISBN: 978-1-4244-4148-8**
• **SCHNELL M ET AL: "Interference mitigation for broadband L-DACS", DIGITAL AVIONICS SYSTEMS CONFERENCE, 2008. DASC 2008. IEEE/AIAA 27TH, IEEE, PISCATAWAY, NJ, USA, 26. Oktober 2008 (2008-10-26), Seiten 1-12, XP031372558, ISBN: 978-1-4244-2207-4 in der Anmeldung erwähnt**
• **SERGEY V ZHIDKOV: "Analysis and comparison of several simple impulsive noise mitigation schemes for OFDM receivers", IEEE TRANSACTIONS ON COMMUNICATIONS, IEEE SERVICE CENTER, PISCATAWAY, NJ. USA, Bd. 56, Nr. 1, 1. Januar 2008 (2008-01-01) , Seiten 5-9, XP011200428, ISSN: 0090-6778, DOI: DOI: 10.1109/TCOMM.2008.050391 in der Anmeldung erwähnt**

## Beschreibung

Die Erfindung betrifft ein Verfahren zur Reduktion von durch Ausblendung von pulsförmigen Störungen entstehenden Informationsverlusten in einem OFDM-basierten Mehrträgersignal, bei dem es sich beispielsweise um ein Kommunikations- oder -navigationssignal handeln kann.

Wird ein Kommunikations- oder Navigationssignal von pulsförmiger Interferenz (Störungen) überlagert, sind konventionelle Ansätze zur Minimierung dieses Störeinflusses die Pulsausblendung (Pulse-Blanking) oder die Amplitudenbegrenzung (Clipping) (siehe z.B. [1]). Auf Grund der hohen Leistung sind die Störpulse bzw. die von der Interferenz betroffenen Abtastwerte einfach zu detektieren. Liegt die detektierte Leistung eines Abtastwertes oberhalb eines bestimmten Schwellwertes, wird der entsprechende Abtastwert zu Null gesetzt (Pulse-Blanking) oder seine Amplitude auf den Schwellwert reduziert (Clipping), wobei die Phase beibehalten wird.

Auch in bestimmten Frequenzbereichen, in denen Mehrträgerkommunikations- bzw. -navigationssysteme basierend auf Orthogonal Frequency-Division Multiplexing (OFDM) betrieben werden, tritt pulsförmige Interferenz auf, die zwar nur sehr kurz ist, aber auf Grund ihrer meist hohen Leistung die Leistungsfähigkeit des OFDM-Systems erheblich beeinträchtigen kann. Um diesen Störeinfluss zu reduzieren, wird üblicherweise die Pulsausblendung oder die Amplitudenbegrenzung angewandt (siehe [2], [3]). Diese Verfahren haben jedoch den Nachteil, dass nicht nur das Interferenzsignal, sondern auch das OFDM-Nutzsignal stark beeinträchtigt wird, auch wenn nur wenige Abtastwerte im Zeitbereichssignal zu Null gesetzt oder in ihrer Amplitude beschränkt werden. Es existieren zwar Verfahren, die darauf abzielen, den störenden Einfluss der Pulsausblendung auf das OFDM-Signal zu kompensieren. Diese Verfahren sind aber meistens sehr komplex und/oder in ihrer Leistungsfähigkeit insofern beschränkt, als dass selbst bei idealen Bedingungen ein nicht unerheblicher Verlust im Signal-zu-Rauschleistungsverhältnis (SNR) verbleibt, der durch Auslöschen bestimmter Anteile des Nutzsignals entsteht und nicht kompensiert werden kann.

Um den negativen Einfluss von Pulse-Blanking auf ein OFDM-Signal zu reduzieren wurden in den letzten Jahren einige Verfahren zur Rekonstruktion und Kompensation des durch Pulse-Blanking verursachten Informationsverlustes vorgeschlagen (z.B. DE-A-10 2008 032 913, US-A-2006/ 0198453, US-A-2005/0220001, US-A-2006/0116095). Zur Kompensation des Einflusses von Clipping auf das OFDM-Signal sind soweit bekannt keine Veröffentlichungen erschienen.

Mit Pulse-Blanking und Clipping kann also auch in OFDM-basierten Systemen die Interferenz reduziert werden; gleichzeitig wird aber das Nutzsignal so stark beeinträchtigt, dass der durch Reduzierung der Interferenzleistung erzielte Gewinn stark geschmälert wird, so dass sich insgesamt mit diesen beiden Ansätzen in OFDM-basierten Systemen nur moderate Gewinne in der Leistungsfähigkeit erzielen lassen.

Die in den letzten Jahren vorgeschlagenen Verfahren zur Kompensation des durch Pulse-Blanking verursachten Informationsverlustes liefern zwar vielversprechende Ergebnisse, sind aber erstens auf Grund ihres iterativen Charakters komplex und zweitens in ihrer Leistungsfähigkeit insofern beschränkt, als dass selbst bei idealen Bedingungen ein nicht unerheblicher SNR-Verlust übrigbleibt, der durch Auslöschen bestimmter Anteile des Nutzsignals entsteht und nicht kompensiert werden kann.

In US-A-2006/0116095 ist ein Verfahren zur Reduzierung von durch Ausblendung impulsförmiger Störungen erzeugten Informationsverlusten in einem OFDM basierten Mehrträgersignal beschrieben. Dabei werden ausgehend von einem Vergleich der ursprünglich gesendeten (und bekannten) und den empfangenen Pilotsignalen in einem OFDM Signal Korrektursignale für jede Subträgerfrequenz bestimmt. Diese Korrektursignale werden anschließend von dem empfangenen (und geschätzten) OFDM Signal subtrahiert. Dadurch werden die mit der Pulsausblendung einhergehenden Informationsverluste in einem OFDM basierten Mehrträgersignal reduziert.

Die vorliegende Erfindung stellt eine leistungsfähige und einfache Alternative zur Reduzierung des Einflusses der Pulsausblendung und Amplitudenbegrenzung in OFDM-Signalen dar.

Aus NDO G ET AL: "An Adaptive Procedure for Impulsive Noise Mitigation over Power Line Channels", GLOBAL TELECOMMUNICATIONS CONFERENCE, 2009. GLOBECOM 2009. IEEE, IEEE, PISCATAWAY, NJ, USA, 30. November 2009 (2009-11-30), Seiten 1-6, XP031645709, ISBN: 978-1-4244-4148-8, ist ein Verfahren zur Reduktion von durch Ausblendung von pulsförmigen Störungen entstehenden Informationsverlusten in einem OFDM-basierten Mehrträgersignal bekannt. Bei diesem Verfahren wird auf ein infolge von pulsförmigen Störungen störbehaftetes OFDM-basiertes Ausgangs-Mehrträgersignal, das Signalanteile mit Störanteilen aufweist, zur Minimierung der Störeinflüsse eine Amplitudenbegrenzungs-Operation angewendet. Dadurch wird ein modifiziertes OFDM-basiertes Mehrträgersignal erzeugt, dessen Signalanteile reduzierte Störanteile aufweist.

Mit der Erfindung wird ein Verfahren zur Reduktion von durch Ausblendung von pulsförmigen Störungen entstehenden Informationsverlusten in einem OFDM-basierten Mehrträgersignal vorgeschlagen, wobei das Verfahren die Schritte gemäß Anspruch 1 aufweist. Nach dem erfindungsgemäßen Verfahren ist vorgesehen, dass im Empfänger eines OFDM-Systems zwei Signalzweige parallel verarbeitet werden. Einer der beiden Signalzweige trägt das Interferenz-behaftete Ausgangs-Mehrträgersignal, von dem bei dem Verfahren ausgegangen wird. In dem anderen Zweig wird Pulse-Blanking oder Clipping angewandt. Transformiert man beide Signalzweige separat in den Frequenzbereich, ist zu erkennen, dass beim Interferenz-behafteten Signal einige Subträger stark, andere kaum von der Interferenz beeinflusst werden. Beim Frequenzbereichs-Signal nach Anwendung von Pulse-Blanking oder Clipping, d.h. bei Transformation des Zeitsignals, auf das Pulse-Blanking oder Clipping angewandt wurde, in den Frequenzbereich ist die Interferenz auf den ursprünglich stark von der Interferenz betroffenen Subträgern deutlich reduziert, während auf allen Subträgern zusätzliche Inter-Carrier Interferenz erzeugt wird.

Beide Signalzweige werden im Frequenzbereich zu einem neuen Mehrträgersignal kombiniert, indem von beiden Signalzweigen jeweils der Subträger ausgewählt wird, der die geringere Störleistung aufweist. Das so erzeugte Signal wird in bekannter Weise im Empfänger weiterverarbeitet.

Dadurch, dass nur ein Teil des verlustbehafteten Signals mit Pulse-Blanking oder Clipping verwendet wird, wird der durch Pulse-Blanking oder Clipping verursachte SNR-Verlust reduziert. Damit kann erfindungsgemäß die Leistungsfähigkeit weiter an den Interferenz-freien Fall angenähert werden.

Mit anderen Worten zeichnet sich die Erfindung durch die folgenden Merkmale aus:

- die parallele Verarbeitung der Empfangssignale mit und ohne Anwendung von Pulse-Blanking oder Clipping,

- die Kombination der Empfangssignale mit und ohne Anwendung von Pulse-Blanking oder Clipping zu einem Signal, das weniger Störeinflüsse aufweist.

Zweckmäßigerweise werden die Störleistungen der Signalanteile bei den einzelnen Subträgerfrequenzen im Ausgangs-Mehrträgersignal sowie im modifizierten Mehrträgersignal abgeschätzt. Die Störleistungen der Signalanteile bei den einzelnen Subträgerfrequenzen im Ausgangs-Mehrträgersignal können dabei anhand von Kenntnissen über die spektralen Eigenschaften einer Störquelle und über die Signalverarbeitung im Empfänger des OFDM-Systems abgeschätzt werden. Diese Vorgehensweise ist grundsätzlich bekannt. Die weiteren Störleistungen, d. h. Inter-Carrier Interferenz, die durch die Anwendung der Pulsausblendungs- oder Amplitudenbegrenzungsoperationen auf das Ausgangs-Mehrträgersignal entstehen, können anhand des Verhältnisses der bei Anwendung dieser Operationen betroffenen Abtastwerte des Ausgangs-Mehrträgersignals (d. h, der ausgeblendeten Abtastwerte im Falle der Pulsausblendung und der auf einen vorgegebenen Amplitudenwert begrenzten Abtastwerte bei der Amplitudenbegrenzung) zur Gesamtzahl der Abtastwerte abgeschätzt werden.

Erfindungsgemäß erfolgt in einem das erfindungsgemäße Verfahren umsetzenden OFDM-Empfänger die Verarbeitung der beiden Mehrträgersignale zunächst getrennt. Der Vergleich beider Signale und damit deren erfindungsgemäße Kombination kann an verschiedenen Stellen der Signalverarbeitung im Empfänger erfolgen. Beispielsweise kann der Vergleich nach der FourierTransformation und vor der Kanalschätzung erfolgen. Alternativ ist es möglich, die Kanalschätzung und Entzerrung für beide Signalzweige noch separat durchzuführen, um erst danach, d.h. vor der Demodulation und Dekodierung den Vergleich durchzuführen und das kombinierte OFDM-basierte Mehrträgersignal zu erzeugen. Schließlich könnte man aber auch den Vergleich zwischen der Demodulation und der Dekodierung oder aber auch nach der Dekodierung durchführen.

Eine mögliche Anwendung des Verfahrens ist ein im aeronautischen Teil des L-Bands (960-1164 MHz) betriebenes OFDM-basiertes Kommunikationssystem, bei dem das empfangene Kommunikationssignal eine Überlagerung aus einem pulsförmigen Signal eines insbesondere bodengestützten Systems zur Entfernungs- und/oder Positionsbestimmung eines Luftfahrzeuges bzw. eines insbesondere militärischen Datenfunksystems einerseits und dem OFDM-basierten Nutzsignal andererseits darstellt. Hierbei ist das Signal des bodengestützten Systems zur Entfernungs- und/oder Positionsbestimmung eines Luftfahrzeuges ein Signal des Distance Measuring Equipment (DME)- bzw. Tactical Air Navigation (TACAN)-Systems oder des Joint Tactical Information Distribution System (JTIDS) bzw. Multifunctional Information Distribution System (MIDS) mit einer Vielzahl von Frequenzkanälen, wobei das OFDM-basierte Signal zwischen die Mittenfrequenzen benachbarter Frequenzkanäle oder auf die Mittenfrequenzen des DME- bzw. JTIDS/MIDS-Signals positioniert wird.

Die Erfindung wird nachfolgend anhand eines Ausführungsbeispiels und unter Bezugnahme auf Zeichnungen näher erläutert. Im Einzelnen zeigen dabei:

Fig. 1    ein vereinfachtes Blockschaltbild eines OFDM-Empfängers, der für die erfindungsgemäße Verarbeitung eines OFDM-basierten Mehrträgersignals ausgelegt ist,

Fig. 2    die spektrale Leistungsdichte eines OFDM-Signals mit 625 kHz Bandbreite und mit Mittenfrequenz zwischen zwei benachbarten Kanälen des DME-Systems,

Fig. 3    eine grafische Darstellung der mittleren Störleistung eines DME-Signals pro Subträger bzw. Subträgerfrequenz vor und nach Anwendung einer Pulsausblendung sowie nach Anwendung des erfindungsgemäßen Verfahrens (Best Subcarrier Selection),

Fig. 4    eine grafische Darstellung der tatsächlichen und geschätzten Störleistung eines DME-Signals pro Subträger vor und nach Anwendung von Pulse-Blanking in einem OFDM-Signal mit N=64 Subträgern und

Fig. 5    eine grafische Darstellung für Beispiele für Bitfehlerraten (BER) für Pulsausblendung bei Anwendung des erfindungsgemäßen Verfahrens basierend auf verschiedenen Entscheidungskriterien.

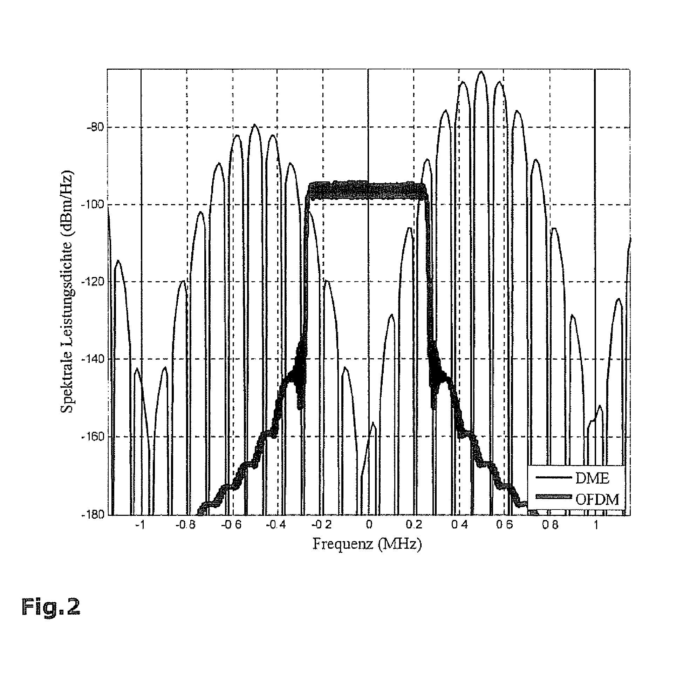

Es wird ein einfaches OFDM-System mit $N$=64 Subträgern betrachtet, die insgesamt eine Bandbreite von 625 kHz umfassen. Am Empfänger überlagern sich das gewünschte OFDM-Signal $y[k], k=0,..,N$-1, und puls-förmige Störsignale $i[k], k = 0,..,N$ - 1, dessen Mittenfrequenzen um 500 kHz gegenüber der Mittenfrequenz des OFDM-Systems nach links und rechts verschoben sind und die jeweils eine Bandbreite von 1 MHz aufweisen (siehe Fig. 2). Im Folgenden wird der Einfachheit halber zunächst nur ein Störsignal mit einer um 500 kHz gegenüber der Mittenfrequenz des OFDM-Systems nach links verschobenen Mittenfrequenz betrachtet.

Das Empfangssignal $r[k]$, $k=0,...,N$-1, im Zeitbereich wird auf zwei Zweige aufgeteilt. In einem Zweig wird es mittels einer N-Punkt diskreten Fourier Transformation (DFT) in den Frequenzbereich transformiert und man erhält $R[n]$, $n=0,...,N$-1. Im zweiten Zweig wird Pulse-Blanking oder Clipping auf das Zeitbereichssignal $r[k], k=0,...,N$-1, angewandt. Das resultierende Signal $r'[k]$, $k=0,...,N$-1, wird ebenfalls mittels einer N-Punkt DFT in den Frequenzbereich transformiert und man erhält $R'[n], n=0,...,N$-1.

Beide Signale werden in der "Best Subcarrier Selection (BSS) Einheit" zu einem Signal $R^{BSS}[n], n = 0,...,N$-1, kombiniert, indem wie im nächsten Abschnitt beschrieben jeweils der am wenigsten beeinträchtigte Subträger aus beiden Signalzweigen ausgewählt wird. Das so erzeugte Signal $R^{BSS}[n], n=0, ..,N$-1, wird wie gewohnt weiterverarbeitet. Nach der Kanalschätzung wird der Kanaleinfluss entzerrt, das Empfangssignal demoduliert und schließlich decodiert.

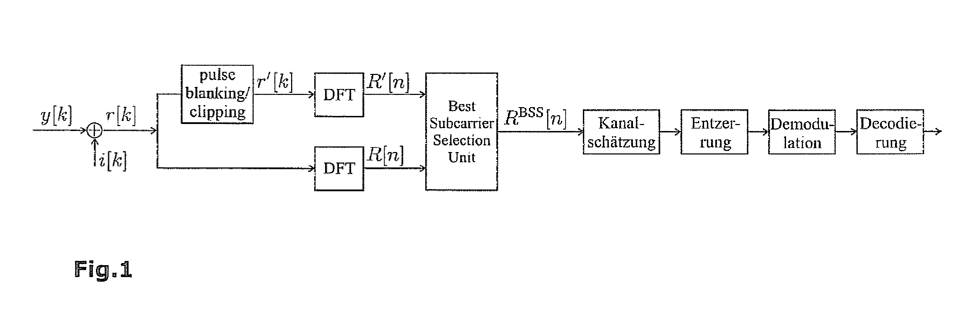

Ein vereinfachtes Blockdiagramm des hier beschriebenen OFDM-Empfängers ist in Fig. 1 dargestellt. Je nach Anwendung kann es vorteilhaft sein, die parallele Verarbeitung beider Signalzweige noch weiter zu führen und z. B. die Kanalschätzung- und Entzerrung für beide Signalzweige separat durchzuführen und die beiden Signalzweige erst danach zusammenzuführen, d.h., dass die BSS-Einheit z. B. nach der Kanalschätzung und Entzerrung und vor der Demodulation oder nach dieser und vor der Dekodierung oder nach der Dekodierung erfolgt.

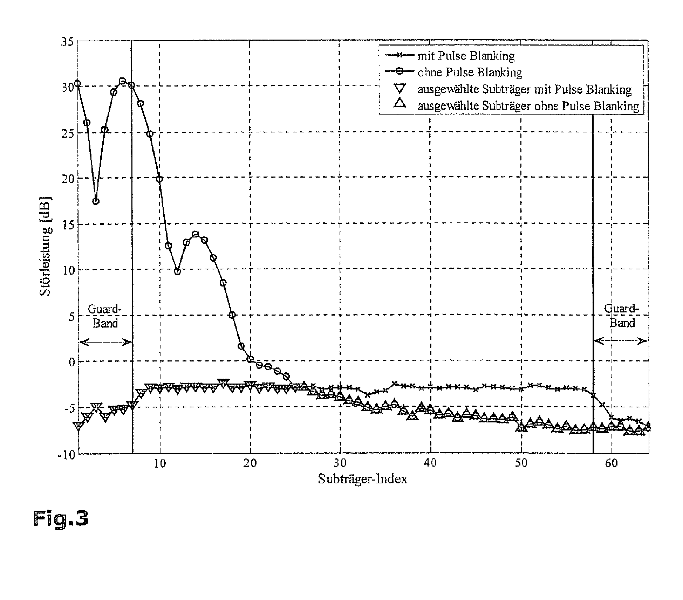

Zur Veranschaulichung der Kombination der beiden Signalzweige ist in Fig. 3 die Störleistung auf den einzelnen Subträgern in beiden Signalzweigen dargestellt. Als Beispiel wird ein DME-Störsignal betrachtet, das einen Frequenzoffset von -500kHz bezogen auf die Mittenfrequenz des OFDM-Systems hat. Die Störleistung wurde jeweils über 5000 OFDM-Symbole gemittelt. Das Signal-zu-Rauschleistungsverhältnis (SNR) beträgt 7 dB. In dem Signalzweig ohne Pulse-Blanking wird die Störleistung $P_d$ von der Interferenz und durch additives weißes Gaußsches Rauschen (AWGN) bestimmt. Der Störeinfluss des hier betrachteten Störers mit um 500 kHz nach links verschobener Mittenfrequenz ist deutlich in der linken Hälfte des Spektrums zu erkennen. In dem Signalzweig mit Pulse-Blanking ist eine fast gleichmäßig über alle Subträger verteilte Störleistung $P_d'$ zu erkennen. Diese setzt sich aus nach Pulse-Blanking verbleibender Restinterferenz, AWGN und durch Pulse-Blanking verursachter Inter-Carrier Interferenz (ICI) zusammen. Diese ICI fällt zu den Rändern hin ab, da die Guard-Bänder am linken und rechten Rand des Spektrums nicht zur Übertragung verwendet werden.

Beim Zusammenführen der beiden Signale mit und ohne Pulse-Blanking werden die Subträger für das resultierende Signal verwendet, die die geringere Störleistung aufweisen. In diesem Beispiel werden also die Subträger 0 bis 25 aus dem Signalzweig mit Pulse-Blanking und die Subträger 26 bis 63 aus dem Signalzweig ohne Pulse-Blanking verwendet. Da die Ergebnisse für Clipping sehr ähnlich sind, werden diese hier nicht gezeigt.

Zur Bestimmung der Position und Anzahl der Subträger, die aus dem jeweiligen Signalzweig verwendet werden, gibt es verschiedene Ansätze. Wird eine perfekte Kenntnis der Störleistung $P_d[n], n = 0,..., N$-1, ohne Pulse-Blanking/ Clipping und der Störleistung $P_d'[n], n=0,...,N$-1, mit Pulse-Blanking/ Clipping auf dem $n$ ten Subträger angenommen, lässt sich das Zusammenführen der beiden Signalzweige, also die Auswahl der jeweils besten Subträger aus jedem Signalzweig, mathematisch folgendermaßen beschreiben:

$$R^{BSS}[n] = \begin{cases} R[n], & \text{wenn } P_d[n] \le P_d'[n] \\ R'[n], & \text{wenn } P_d[n] > P_d'[n] \end{cases}, n = 0,...,N-1 .$$

Da die Störleistungen $P_d[n], n=0,..,N$-1, und $P_d'[n], n=0,..,N$-1, in der Realität nicht bekannt sind, müssen sie geschätzt bzw. approximiert werden. Zur Ermittlung der Störleistung $P_d[n], n=0,..,N$-1, im Signalzweig ohne Pulse-Blanking/Clipping können beispielsweise die nicht verwendeten Subträger in den Guard-Bändern herangezogen werden. Hierzu wird in beiden Guard-Bändern jeweils die maximale Leistung gemessen. Ausgehend davon kann beispielsweise bei einem DME-Störsignal die Störleistung durch eine Gerade approximiert werden. Die Steigung der Geraden entspricht dem Leistungsabfall der tatsächlichen Interferenz und kann mit Hilfe von A-Priori Wissen über die spektrale Form des Störsignals bestimmt werden [4]. Die von ICI dominierte Störleistung $P_d'[n],n=0,..,N-1$, im Signalzweig mit Pulse-Blanking/Clipping lässt sich aus der Anzahl $K$ der im betrachteten OFDM-Symbol zu Null gesetzten Abtastwerte ableiten. Es gilt:

$$P_d{}'[n]: \frac{N-K}{N}\left(1-\frac{N-K}{N}\right)=\frac{NK-K^2}{N^2}$$

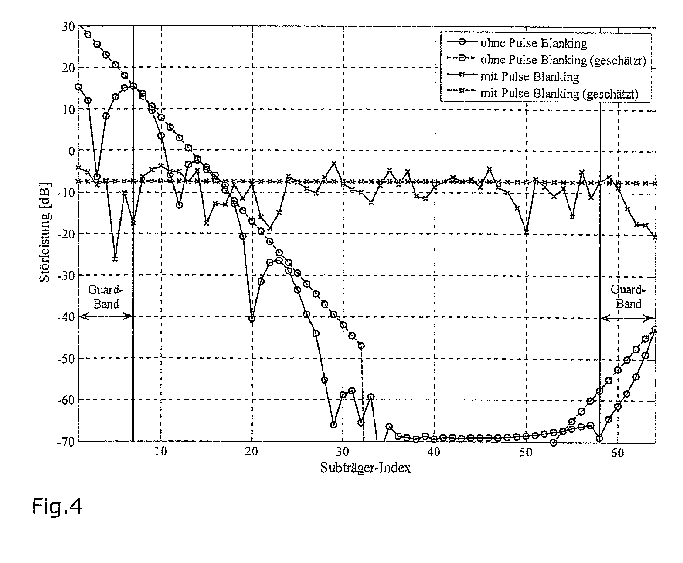

Die Approximation der Störleistungen in den Signalzweigen mit und ohne Pulse-Blanking ist in Fig. 4 für ein DME-Störsignal dargestellt.

Ein einfacherer Ansatz, der keine Schätzung der Störleistungen erfordert, ist beispielsweise die Verwendung einer festen Anzahl und Position von Subträgern aus dem Signalzweig mit Pulse-Blanking oder Clipping. Die restlichen Subträger werden aus dem Signalzweig ohne Pulse-Blanking/Clipping verwendet. Dieser Ansatz kann noch dahingehend verbessert werden, dass der Algorithmus nur dann angewendet wird, wenn in den Guard-Bändern ein Störer detektiert wird. Noch bessere Ergebnisse werden erzielt, wenn die Anzahl an die Interferenzsituation im jeweils betrachteten OFDM-Symbol angepasst wird.

Je nachdem, wann die beiden parallelen Signalzweige zusammengeführt werden, können auch andere Kriterien als die Störleistung zur Auswahl der Subträger herangezogen werden. Die beiden Signalzweige können beispielsweise erst nach der Decodierung zusammengeführt werden. In diesem Fall kann Information über die Zuverlässigkeit der decodierten Bits als Entscheidungskriterium dienen.

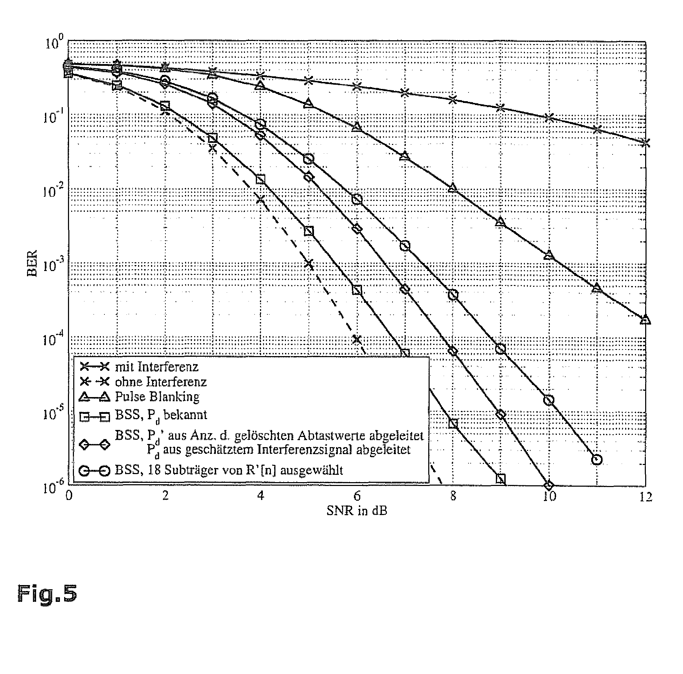

Fig. 5 zeigt die Leistungsfähigkeit des vorgeschlagenen "Best Subcarrier Selection"-Algorithmus für verschiedene Ansätze zur Auswahl der Subträger für Pulse-Blanking. Zum Vergleich sind die Bitfehlerraten (BER) über dem SNR für die Fälle mit und ohne Interferenz gegeben. Für die Interferenz wird ein Szenario angenommen, wie es typischerweise im aeronautischen Teil des L-Bands (960-1164 MHz) auftritt, wenn ein OFDM-System in den spektralen Lücken zwischen jeweils zwei Kanälen betrieben wird, die vom DME-System verwendet werden. In diesem Szenario treten drei DME-Störer in dem Kanal mit einer um 500 kHz gegenüber der Mittenfrequenz des OFDM-Systems nach links verschoben Mittenfrequenz und ein DME-Störer in dem Kanal mit einer um 500 kHz gegenüber der Mittenfrequenz des OFDM-Systems nach rechts verschobenen Mittenfrequenz auf. Insgesamt ergibt sich damit ein Interferenzsignal, das fast jedes OFDM-Symbol beeinträchtigt.

Wie in Fig. 5 gezeigt, kann der starke Einfluss der Interferenz gemindert werden, wenn Pulse-Blanking angewandt wird. Allerdings gibt es in diesem Fall noch erhebliche Verluste im Vergleich zum Interferenz-freien Fall. Wird das Empfangssignal auf einen Zweig mit und einen ohne Pulse-Blanking aufgeteilt und werden die beiden Zweige anschließend entsprechend der perfekt bekannten Störleistung in beiden Zweigen wieder zusammengeführt, ist eine deutliche Steigerung der Leistungsfähigkeit zu erkennen. In diesem Fall wird der Interferenz-freie Fall bis auf 0,7 dB bei BER = $10^{-4}$ erreicht. Auch bei nicht perfekter Kenntnis der Störleistungen kann die Leistungsfähigkeit von Pulse-Blanking erheblich verbessert werden. Werden beispielsweise 18 Subträger an beiden Rändern aus dem Signalzweig mit Pulse-Blanking verwendet, sofern ein Störer in den Guard-Bändern detektiert wird, kann der Abstand zum Interferenz-freien Fall auf ca. 2,5 dB reduziert werden. In einem weiteren Beispiel wird die Störleistung $P_d'[n],n=0,..,N-1$, nach Pulse-Blanking mit Hilfe der Anzahl der zu Null gesetzten Abtastwerte approximiert. Dabei gilt in jedem OFDM-Symbol die gleiche Störleistung auf allen Subträgern, d. h. $P_d'[n]=P_d',n=0,..,N-1$. Für die Störleistung $P_d[n],n=0,..,N-1$, ohne Pulse-Blanking wird die spektrale Form des Interferenzsignals anhand der Beobachtungen auf den Subträgern in den Guard-Bändern geschätzt. Die resultierende BER ist ebenfalls in Fig. 5 dargestellt. In diesem Fall wird der Interferenz-freie Fall bis auf ca. 1,7 dB erreicht.

Um die Leistungsfähigkeit des OFDM-Systems weiter zu verbessern kann dieser Ansatz für Pulse-Blanking mit den bekannten Verfahren zur Kompensation des durch Pulse-Blanking verursachten Informationsverlustes (z. B. DE 10 2008 032 913 A1) kombiniert werden.

Für Clipping in Kombination mit dem erfindungsgemäßen Best Subcarrier Selection-Verfahren werden ähnliche Resultate erzielt. Die Ergebnisse sind jedoch etwas schlechter als die bei Pulse-Blanking, da die nach Clipping verbleibende Restinterferenz etwas höher ist als die nach Pulse-Blanking verbleibende Restinterferenz.

## LITERATURANGABEN

[1] Grace Xingxin Gao, "DME/TACAN Interference and its Mitigation in L5/E5 Bands", in ION Institute of Navigation Global Navigation Satellite Systems Conference, Fort Worth, TX USA, Sept. 2007

[2] Sergey V. Zhidkov, "Impulsive Noise Suppression in OFDM Based Communication Systems", IEEE Transactions on Consumer Electronics, vol. 49, no. 4, Nov. 2003, pp. 944-948

[3] Sergey V. Zhidkov, "Analysis and Comparison of Several Simple Impulsive Noise Mitigation Schemes for OFDM Receivers", IEEE Transactions on Communications, vol. 56, no. 1, pp. 5-9, January 2008

[4] M. Schnell, S. Brandes, S. Gligorevic, M. Walter, C. Rihacek, M. Sajatovic, B. Haindl, "Interference Mitigation for Broadband L-DACS," 2008 Digital Avionics Systems Conference (DASC 2008), St. Paul, MN, USA, October 2008

**Patentansprüche**

1. Verfahren zur Reduktion von durch Ausblendung von pulsförmigen Störungen entstehenden Informationsverlusten in einem OFDM-basierten Mehrträgersignal, von dem bei dem Verfahren ausgegangen wird, wobei bei dem Verfahren

   - auf ein infolge pulsförmiger Störungen störbehaftetes OFDM-basiertes Ausgangs-Mehrträgersignal, das bei mehreren Subträgerfrequenzen Signalanteile mit Störanteilen aufweist, zur Minimierung der Störeinflüsse eine Pulsausblendungs- oder Amplitudenbegrenzungs-Operation angewendet wird, wodurch ein modifiziertes OFDM-basiertes Mehrträgersignal erzeugt wird, dessen Signalanteile bei den Subträgerfrequenzen zum einen reduzierte Störanteile, zum anderen aber zusätzliche, durch Pulsausblendung- oder Amplitudenbegrenzung erzeugte Störanteile, sogenannte Inter-Carrier Interferenzen ICI aufweisen,
   **dadurch gekennzeichnet , dass**
   - das Ausgangs-Mehrträgersignal und das modifizierte Mehrträgersignal jeweils in den Frequenzbereich transformiert werden,
   - für jeden Subträger das transformierte Ausgangs- und das transformierte modifizierte Mehrträgersignal miteinander verglichen werden, um aus ihnen für jede Subträgerfrequenz das Subträgersignal mit dem geringeren Störanteil auszuwählen, und
   - aus den ausgewählten Subträgersignalen ein neues OFDM-basiertes Mehrträgersignal zusammengesetzt wird, dessen Informationsverlust gegenüber dem Ausgangs-Mehrträgersignal reduziert ist.

2. Verfahren nach Anspruch 1, **dadurch gekennzeichnet, dass** die Störleistungen der Signalanteile bei den Subträgerfrequenzen des modifizierten Mehrträgersignals anhand des Verhältnisses der bei Anwendung der Pulsausblendungs- oder Amplitudenbegrenzungs-Operation betroffenen Abtastwerte des Ausgangs-Mehrträgersignals zur Gesamtzahl der Abtastwerte abgeschätzt wird.

3. Verfahren nach Anspruch 1 oder 2, **dadurch gekennzeichnet, dass** die Störleistungen der Signalanteile bei den Subträgerfrequenzen des Ausgangs-Mehrträgersignals anhand von Kenntnissen über die spektralen Eigenschaften einer die pulsförmigen Störungen verursachenden Störquelle und über die Signalverarbeitung in einem das Ausgangs-Mehrträgersignal empfangenden Empfängers abgeschätzt wird.

4. Verfahren nach einem der Ansprüche 1 bis 3, **dadurch gekennzeichnet, dass** das empfangene Mehrträgersignal eine Überlagerung aus einem pulsförmigen Störsignal eines Systems zur Entfernungs- und/oder Positionsbestimmung eines Luftfahrzeuges einerseits und einem OFDM-basierten Signal andererseits darstellt.

5. Verfahren nach Anspruch 4, **dadurch gekennzeichnet, dass** das System zur Entfernungs- und/oder Positionsbestimmung eines Luftfahrzeuges bodengestützt ist.

6. Verfahren nach einem der Ansprüche 1 bis 3, **dadurch gekennzeichnet, dass** das empfangene Mehrträgersignal eine Überlagerung aus einem pulsförmigen Störsignal eines Datenfunksystems einerseits und einem OFDM-basierten Signal andererseits darstellt.

7. Verfahren nach Anspruch 6, **dadurch gekennzeichnet, dass** das Datenfunksystem ein militärisches Datenfunksystem ist.

8. Verfahren nach Anspruch 5, **dadurch gekennzeichnet, dass** das Störsignal des bodengestützten Systems zur Entfernungs- und/oder Positionsbestimmung eines Luftfahrzeuges ein DME- oder TACAN-Signal oder ein JTIDS/MIDS-Signal mit einer Vielzahl von Frequenzkanälen ist, wobei das OFDM-basierte Signal zwischen die Mittenfrequenzen benachbarter Frequenzkanäle oder auf die Mittenfrequenzen des DME- oder TACAN- oder JTIDS/MIDS-Signals positioniert wird.

**Claims**

1. A method for reducing information losses in an OFDM-based multi-carrier signal, which the method starts from, caused by the blanking of pulse-shaped interferences, wherein in the method

   - for minimizing the interfering influences, a pulse-blanking or amplitude-limitation operation is applied to an OFDM-based initial multi-carrier signal affected by interferences due to pulse-shaped interferences, said signal having signal components with interference components at a plurality of sub-carrier frequencies, whereby a modified OFDM-based multi-carrier signal is generated whose signal components have, on the one hand, reduced interference components and, on the other hand, also have additional interference components caused by pulse blanking or amplitude limitation, referred to as inter-carrier interferences ICI, at the sub-carrier frequencies,
   **characterized in that**
   - the initial multi-carrier signal and the modified multi-carrier signal are each transformed into the frequency range,
   - for each sub-carrier, the transformed initial multi-carrier signal and the transformed modified multi-carrier signal are compared to each other, to choose therefrom the sub-carrier signal with the smaller interference component for each sub-carrier frequency, and
   - a new OFDM-based multi-carrier signal is composed from the chosen sub-carrier signals, the information loss thereof being reduced relative to the initial multi-carrier signal.

2. The method of claim 1, **characterized in that** the interference power of the signal components at the sub-carrier frequencies of the modified multi-carrier signal is estimated based on the ratio of the sampled values of the initial multi-carrier signal affected by the application of the pulse blanking or amplitude limitation operation to the total number of the sampled values.

3. The method of claim 1 or 2, **characterized in that** the interference power of the signal components at the sub-carrier frequencies of the initial multi-carrier signal is estimated based on knowledge about the spectral characteristics of an interference source causing the pulse-shaped interferences and about the signal processing in a receiver receiving the initial multi-carrier signal.

4. The method of one of claims 1 to 3, **characterized in that** the received multi-carrier signal is a superposition of a pulse-shaped interference signal of a system for determining the distance and/or the position of an aircraft, on the one hand, and an OFDM-based signal, on the other hand.

5. The method of claim 4, **characterized in that** the system for determining the distance and/or the position of an aircraft is ground-based.

6. The method of one of claims 1 to 3, **characterized in that** the received multi-carrier signal is a superposition of a pulse-shaped interference signal of a data radio system, on the one hand, and an OFDM-based signal, on the other hand.

7. The method of claim 6, **characterized in that** the data radio system is a military data radio system.

8. The method of claim 5, **characterized in that** the interference signal of the ground-based system for determining the distance and/or the position of an aircraft is a DME or TACAN signal or a JTIDS/MIDS signal with a plurality of frequency channels, wherein the OFDM-based signal is positioned between the center frequencies of adjacent frequency channels or on the center frequencies of the DME or TACAN or JTIDS/MIDS signal.

**Revendications**

1. Procédé de réduction de pertes d'informations générées par la suppression de parasites sous forme d'impulsions dans un signal multi-porteuses à base d'OFDM duquel on part pour le procédé, dans lequel, lors du procédé,

   - pour minimiser les influences parasites, on applique une opération de suppression d'impulsions ou de limitation d'amplitude sur un signal multi-porteuses en sortie à base d'OFDM perturbé par des parasites sous forme d'impulsions, qui comporte, à plusieurs fréquences de sous-porteuses, des composantes de signal ayant des composantes parasites, l'opération générant un signal multi-porteuses à base d'OFDM modifié, dont les composantes de signal aux fréquences de sous-porteuses présentent, d'une part, des composantes parasites réduites, mais d'autre part des composantes parasites supplémentaires produites par la suppression d'impulsions ou la limitation d'amplitude, lesdites interférences entre porteuses, ou ICI,
**caractérisé en ce que**
- le signal multi-porteuses en sortie et le signal multi-porteuses modifié sont respectivement transformés dans la plage de fréquence,
- pour chaque sous-porteuse, le signal multi-porteuses en sortie transformé et le signal multi-porteuses modifié transformé sont comparés l'un à l'autre pour sélectionner, pour chaque fréquence de sous-porteuse, le signal de sous-porteuse ayant la composante parasite la plus faible, et
- à partir des signaux de sous-porteuses sélectionnés, un nouveau signal multi-porteuses à base d'OFDM est composé, dont la perte d'informations est réduite par rapport au signal multi-porteuses en sortie.

2.  Procédé selon la revendication 1, **caractérisé en ce que** la puissance d'interférence des composantes de signal aux fréquences de sous-porteuses du signal multi-porteuses modifié est estimée à l'aide du rapport entre les échantillons du signal multi-porteuses en sortie concernés lors de l'application de l'opération de suppression d'impulsions ou de limitation d'amplitude et le nombre total des échantillons.

3.  Procédé selon la revendication 1 ou 2, **caractérisé en ce que** la puissance d'interférence des composantes de signal aux fréquences de sous-porteuses du signal multi-porteuses en sortie est estimée à l'aide de connaissances relatives aux propriétés spectrales d'une source d'interférences provoquant les parasites sous forme d'impulsions, et au traitement des signaux dans un récepteur recevant le signal multi-porteuses en sortie.

4.  Procédé selon l'une des revendications 1 à 3, **caractérisé en ce que** le signal multi-porteuses reçu représente une superposition d'un signal parasite sous forme d'impulsions d'un système de détermination de la distance et/ou de la position d'un aéronef, d'une part, et d'un signal à base d'OFDM, d'autre part.

5.  Procédé selon la revendication 4, **caractérisé en ce que** le système de détermination de la distance et/ou de la position d'un aéronef est un système au sol.

6.  Procédé selon l'une des revendications 1 à 3, **caractérisé en ce que** le signal multi-porteuses reçu représente une superposition d'un signal parasite sous forme d'impulsions d'un système de radiotransmission de données, d'une part, et d'un signal à base d'OFDM, d'autre part.

7.  Procédé selon la revendication 6, **caractérisé en ce que** le système de radiotransmission de données est un système de radiotransmission militaire.

8.  Procédé selon la revendication 5, **caractérisé en ce que** le signal parasite du système au sol de détermination de la distance et/ou de la position d'un aéronef est un signal DME ou TACAN ou un signal JTIDS/MIDS doté d'une pluralité de canaux de fréquence, le signal à base d'OFDM étant positionné entre les fréquences centrales de canaux de fréquence adjacents ou sur les fréquences centrales du signal DME ou TACAN ou JTIDS/MIDS.

$y[k]$ → ⊕ $r[k]$ →

$i[k]$

pulse blanking/ clipping → $r'[k]$ → DFT → $R'[n]$ →

DFT → $R[n]$ →

Best Subcarrier Selection Unit → $R^{\mathrm{BSS}}[n]$ → Kanal-schätzung → Entzer-rung → Demodu-lation → Decodie-rung →

**Fig.1**

**Fig.2**

**Fig.3**

Fig.4

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008032913 A
- US 20060198453 A
- US 20050220001 A

- US 20060116095 A
- DE 102008032913 A1

**In der Beschreibung aufgeführte Nicht-Patentliteratur**

- An Adaptive Procedure for Impulsive Noise Mitigation over Power Line Channels. **NDO G et al.** GLOBAL TELECOMMUNICATIONS CONFERENCE, 2009. GLOBECOM 2009. IEEE. IEEE, 30. November 2009, 1-6
- **GRACE XINGXIN GAO.** DME/TACAN Interference and its Mitigation in L5/E5 Bands. *ION Institute of Navigation Global Navigation Satellite Systems Conference, Fort Worth, TX USA,* September 2007
- **SERGEY V. ZHIDKOV.** Impulsive Noise Suppression in OFDM Based Communication Systems. *IEEE Transactions on Consumer Electronics,* November 2003, vol. 49 (4), 944-948

- **SERGEY V. ZHIDKOV.** Analysis and Comparison of Several Simple Impulsive Noise Mitigation Schemes for OFDM Receivers. *IEEE Transactions on Communications,* Januar 2008, vol. 56 (1), 5-9
- **M. SCHNELL ; S. BRANDES ; S. GLIGOREVIC ; M. WALTER ; C. RIHACEK ; M. SAJATOVIC ; B. HAINDL.** Interference Mitigation for Broadband L-DACS. *2008 Digital Avionics Systems Conference (DASC 2008), St. Paul, MN, USA,* Oktober 2008